# EUROPÄISCHE PATENTSCHRIFT

(11) **EP 3 392 176 B1**
(45) Veröffentlichungstag und Bekanntmachung des Hinweises auf die Patenterteilung: **13.10.2021**
(21) Anmeldenummer: 18168127.1
(22) Anmeldetag: 19.04.2018
(51) Int. Cl.: B65H 49/38, B60P 3/035, H02G 1/06

(54) **BEREITSTELLUNG IM WESENTLICHEN LINIENFÖRMIGER NUTZLASTEN AN EINEM TRANSPORTZIELORT**
PROVISION OF MAINLY LINEAR PAYLOADS AT A TRANSPORT DESTINATION
FOURNITURE DE CHARGES UTILES SENSIBLEMENT DE FORME LINÉAIRE À UNE DESTINATION DE TRANSPORT

(30) Priorität: 21.04.2017 DE 102017108538
(43) Veröffentlichungstag der Anmeldung: 24.10.2018
(73) Patentinhaber: Spiegel, Werner, 42897 Remscheid (DE)
(72) Erfinder: Spiegel, Werner, 42897 Remscheid (DE)
(74) Vertreter: Weisbrodt, Bernd

(56) Entgegenhaltungen:
- WO-A1-2014/094065
- DE-A1- 1 765 882
- JP-A- S5 996 025
- US-A1- 2016 362 950

## Beschreibung

Die vorliegende Erfindung betrifft Verfahren und Vorrichtungen zur Bereitstellung im Wesentlichen linienförmiger Nutzlasten, insbesondere langer Kabel bzw. Seile großen Durchmessers und/oder Gewichts, an einem Transportzielort.

Technologisch und aus physikalischen Gründen und nicht zuletzt aus wirtschaftlichen Gründen besteht bei Netzbetreibern und Endverbrauchern in der Regel der Wunsch, Strom möglichst verlustarm zu transportieren. Bei Erdkabelprojekten zur Übertragung von Strom im Höchstspannungsbereich, z. B. HGÜ-Stromtrassen Projekte, werden dazu Erdkabel mit großen Leiterquerschnitten und großen Kabelgewichten verwendet, vergleichbar mit denen von Seilbahntragseilen. Insbesondere bedingt durch die Dicke der Isolationsschicht bei Kabeln, führt dies zu großen Kabelquerschnitten und Kabeldurchmessern, die bei Kabeln für den Höchstspannungsbereich größer als 140 mm sein können. Gewicht und Kabelspulenabmessungen führen zu Beschränkungen beim Straßen- und Schienentransport, wenn es darum geht, größtmögliche Einzelkabellängen auf Kabelspulen, Kabeltrommeln oder Seilspulen vom Ort der Kabel- bzw. Seiherstellung zum Transportzielort bzw. zum Montageort zu transportieren. Aus diesem speziellen Grund sind, im Gegensatz zum Seekabeltransport auf Schiffen, bei Landkabeltransporten Gewicht und Kabelspulenabmessungen ein begrenzender Faktor für den Erdkabelbau.

Bekannt ist, dass derzeit auf Straßen der Kabeltransport für Höchstspannungserdkabel in der Regel mittels Einzelspulen erfolgt, auf die Kabellängen, je nach Kabeldesign für den Höchstspannungsbereich, von ca. 800m bis 1200m aufgespult und transportiert werden können, da die Spulenhöhe und Spulenbreite, sowie das Transportgewicht, begrenzende Faktoren für den Landtransport darstellen und somit nur eine begrenzte Länge als Einzelnutzlast mit herkömmlichen Mitteln transportiert werden kann.

Bekannt ist andererseits, dass lange Tragseile, z. B. von Seilbahnen, für den Landtransport aufgeteilt und auf zwei Spulen, quasi als Spulenzwilling, ohne freies Ende gewickelt, mittels Spezialfahrzeugen oder im Fahrzeugverbund auf Straßen transportiert werden, unter Beachtung der zulässigen Achslasten und der zulässigen Transporthöhen und -breiten, insbesondere bei Unterquerungen und Überquerungen von Brückenbauwerken.

Vor dem Hintergrund, dass es einerseits gilt, die Anzahl teurer und störanfälliger Kabelmuffenverbindungen und die Anzahl der Muffenbauwerke und Muffengruben so gering wie möglich zu halten und andererseits Verfahren bekannt sind, die es ermöglichen, ultralange Kabel zugbelastungsfrei über sehr lange Distanzen in Leerrohre einzuziehen, siehe insbesondere DE 10 2013 102 631 B4 bzw. der EP 2 779 336 A1, ist der Bedarf umso größer, die auf Straßen transportierbare Einzelkabellänge zu maximieren.

Die JP S59 96025 A offenbart eine Vorrichtung, bei der Trommeln mit dem gleichen Durchmesser längs an einem hinteren Körper eines Transportfahrzeugs montiert sind und beide Enden der Mittelwellen, die drehbar in den beiden Trommeln befestigt sind, integral durch Verbindungselemente angeordnet sind. Ferner ist ein Wagenheber zum vertikalen Bewegen beider Trommeln durch eine Drehachse vorgesehen, wobei die Drehachse, von den zentralen Abschnitten der Verbindungselemente gelagert, an dem hinteren Körper angebracht ist, wobei zusätzlich ein Motor vorgesehen ist, der mittels eines Antriebriemens beide Trommeln einstückig um die Drehwelle dreht.

Die US 2016/0362950 A1 offenbart eine Rohrspulenbaugruppe umfassend zwei drehbare Rohrspulen, welche gemeinsam eine einzige kontinuierliche Länge eines aufgewickelten Rohres halten, das um beide Spulen gewickelt sind. Dabei sorgt ein Antriebsmechanismus für eine kontrollierte Drehung der Rollen, und ein Nivelliermechanismus positioniert das aufgewickelte Rohr während der Rollendrehung auf den Rollen.

Es ist wünschenswert, auch unabhängig von bekannten stationären Vorrichtungen und/oder Spulprozessen, insbesondere in den Herstellerwerken, die Beladung, den Transport und/oder die Entladung sowie die Verbringung linienförmiger Nutzlasten am Transportzielort zu vereinfachen, um insbesondere solche Kabel, Seile und/oder andere linienförmige Nutzlasten bereitstellen zu können, die aus wirtschaftlichen Gründen in möglichst langen Einzellängen transportiert werden.

Zur technischen Lösung wird mit der vorliegenden Erfindung ein Verfahren zur Bereitstellung im Wesentlichen linienförmiger Nutzlasten, insbesondere langer Kabel bzw. Seile großen Durchmessers und/oder Gewichts, an einem Transportzielort gemäß Anspruch 1 vorgeschlagen.

Der Schutzbereich der vorliegenden Offenbarung ist ausschließlich durch die Patentansprüche definiert. Andere, nicht unter deren Wortlaut fallende Ausgestaltungen dienen lediglich als illustrative Beispiele.

Vorteilhafterweise wird im Verfahrensschritt 1. die Gesamtnutzlast zunächst auf eine Transportspule aufgespult (A1).

Vorteilhafterweise wird im Verfahrensschritt 2. ein Teil der Nutzlast durch Umspulen (U1) auf mindestens eine zweite Transportspule, abgegeben.

Vorteilhafterweise wird im Verfahrensschritt 3. die so geteilte Gesamtnutzlast mittels mindestens zweier Transportspulen, auf mindestens einem Transportfahrzeug transportiert.

Vorteilhafterweise wird im Verfahrensschritt 4. die geteilte Nutzlast durch Rückspulen wieder auf nur eine Spule umgespult (U2).

Vorteilhafterweise wird im Verfahrensschritt 5. mit einem wieder verfügbaren freien Ende die Gesamtnutzlast zum Abspulen am Transportzielort bereitgestellt (A2).

Gegenstand der Erfindung sind ferner Vorrichtungen, insbesondere Spulen bzw. Spulenkörper, die ausgebildet und/oder eingerichtet sind, ein erfindungsgemäßes Verfahren zu realisieren bzw. mit einem solchen angewendet zu werden.

Das erfindungsgemäß gegebene kombinierte Spul- und Transportverfahren ermöglicht vorteilhafterweise eine Verbesserung und Erleichterung des Transports und der Bereitstellung linienförmiger Nutzlasten, insbesondere langer Kabel und Seile großen Durchmessers und Gewichts.

Durch die erfindungsgemäß gegebene bzw. vorgesehene Verteilung solcher Nutzlasten, insbesondere langer Kabel bzw. Seile großen Durchmessers und/oder Gewichts, auf mindestens einem Spulentransportfahrzeug und auf mindestens zwei für den Landtransport geeigneten Transportspulen können Auf-, Um- und/oder Abspulprozesse vorteilhafterweise unmittelbar auf einem Spulentransportfahrzeug erfolgen. Vorteilhafterweise ist dazu eine Transportspule vorgesehen oder eine Transportspule mit Vorrichtungen versehen bzw. versehbar, derart dass diese auf dem Spulentransportfahrzeug erfindungsgemäß auch im Beladungszustand durch manuelle Betätigung umrüstbar ist und umgerüstet als erfindungsgemäße Groß- oder Überlastspule genutzt werden kann. Vorteilhafterweise ist die Groß- oder Überlastspule auf dem Spulentransportfahrzeug drehbar gelagert, vorzugsweise derart, dass unabhängig von stationären Krananlagen oder mobilen Kranfahrzeugen, besonders vorteilhaft auch im beladenen Zustand der Groß- oder Überlastspule, nach Bedarf und vorteilhafterweise, einerseits eine Vergrößerung der Spulenbeladekapazität leicht und schnell eingerichtet werden kann und andererseits, nach Abschluss der erfindungsgemäßen Spulprozesse zur Nutzlastverteilung auf mehrere Transportspulen, durch Bedienung der erfindungsgemäßen Vorrichtungen, die Spule in den Transportmodus rückversetzt werden kann. Vorteilhafterweise ist ferner vorgesehen, dass unabhängig vom Standort des Spulentransportfahrzeugs auf diesem mit zusätzlichen Vorrichtungen, für im Überlastmodus durchzuführende Spulprozesse, einerseits eine benötigte größere Bodenfreiheit der Groß- oder Überlastspule hergestellt wird und andererseits eine schadfreie Abtragung des zeitweilig überhöhten Gewichts des Spulentransportfahrzeugs im Überlastmodus erfolgt, welches insbesondere beim Aufspulen der Gesamtnutzlast auf die Groß- oder Überlastspule entsteht und auf das Spulentransportfahrzeug übertragen wird.

Eine bevorzugte Ausgestaltung der Erfindung ist gekennzeichnet durch eine erfindungsgemäße Bereitstellung im Wesentlichen linienförmiger Nutzlasten, insbesondere langer Kabel bzw. Seile großen Durchmessers und/oder Gewichts, an einem Transportzielort in Kombination mit einer Kabelverlegung gemäß der DE 10 2013 102 631 B4 bzw. der EP 2 779 336 A1, insbesondere da deren Lösungen es ermöglichen, ultralange Kabel zugbelastungsfrei über sehr lange Distanzen in Leerrohre einzuziehen. Daraus resultiert insbesondere der Bedarf, die auf Straßen transportierbare Einzelkabellänge zu maximieren, insbesondere wenn darüber hinaus in Aussicht gestellt werden kann auf für schwere Lasten ausgelegte teure Zuwegungen zu den Kabelgräben und Muffengruben weitgehend verzichten zu können, wie dies bei einer Kabelverlegung gemäß der DE 10 2013 102 631 B4 bzw. der EP 2 779 336 A1 gegeben ist. Vorteilhafterweise sind die erfindungsgemäßen Lösungen dabei auf Kabeltransportfahrzeugen nutzbar, insbesondere um Höchstspannungskabel ultralang transportieren und für die Verlegung bereitstellen zu können.

Vorteilhafterweise ermöglichen die erfindungsgemäßen Lösungen einerseits eine Verbesserung und Vereinfachung hinsichtlich der Beladung beispielsweise eines Spulenzwillings oder gegenüber anderen herkömmlichen Verfahren, insbesondere da erfindungsgemäß ein ansonsten viel Platz benötigendes Ausziehen oder ein ansonsten erforderliches Zwischenlagern der Teilnutzlast zwecks Beladung der zweiten Spule im Herstellerwerk bzw. am Transportzielort entfallen können.

Vorteilhafterweise ermöglichen es die erfindungsgemäßen Lösungen ferner, dass das Rückspulen eines auf mehreren, z. B. in seiner Gesamtlänge wegen der Transporteinschränkungen auf zwei Spulen aufgewickelten Kabels oder Seils, auf nur eine einzige der beiden für den Transport verwendeten Spulen, insbesondere auch am Transportzielort ermöglicht bzw. erleichtert wird, insbesondere derart, dass das Kabel oder Seil dem weitergehenden Verwendungszweck zugeführt werden kann, ohne dass dazu Kabeltransportfahrzeuge auf und über für schwere Lasten ausgelegte Zuwegungen unmittelbar an den Verlegeort bzw. Transportzielort des Kabels fahren müssen. Die Vorteile sind insbesondere in Kombination mit Kabelverlegungen gemäß der DE 10 2013 102 631 B4 bzw. der EP 2 779 336 A1 besonders nachhaltig.

Weitere Einzelheiten und Merkmale der Erfindung werden nachfolgend anhand der in den Figuren der Zeichnung dargestellten Ausführungsbeispiele der Erfindung näher erläutert.

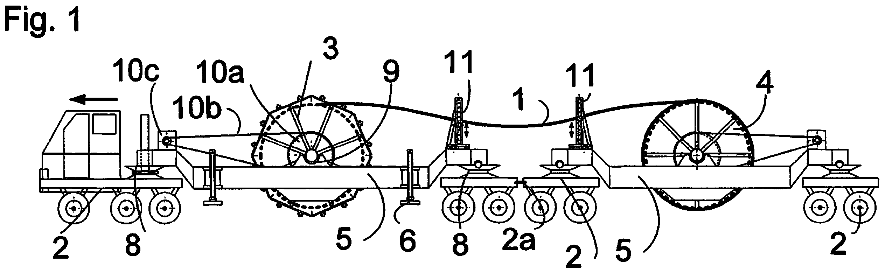

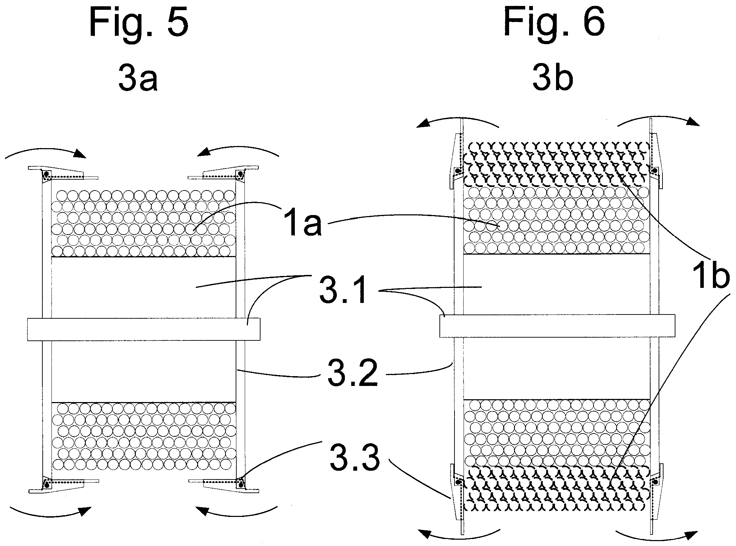

In Fig. 1 bis Fig. 4 sind Ausführungsbeispiele für erfindungsgemäße Verfahren und in Fig. 5 bis Fig. 8 Ausführungsbeispiele für erfindungsgemäße Vorrichtungen dargestellt, welche die Transportfähigkeit langer und schwerer linienförmiger Nutzlasten für den Landtransport auf Straßen- und Schienentransportfahrzeugen gegenüber herkömmlichen Verfahren verbessern und erleichtern, insbesondere den Landtransport langer Höchstspannungskabel mit großem Kabeldurchmesser.

Mit den erfindungsgemäßen Vorrichtungen, vorliegend insbesondere sogenannten Groß- oder Überlastspulen 3 und ihren Teilvorrichtungen 3.2 bis 3.5 (siehe auch Fig. 5 bis Fig. 8), lassen sich vorteilhafterweise die erfindungsgemäßen Auf-, Um- und/oder Abspulprozesse realisieren, mithilfe derer die Beladung und Entladung der Spulen 3 und 4 auf und von erfindungsgemäß ausgerüsteten Spulentransportfahrzeugen 2 und ihren Teilvorrichtungen 5 bis 11 erreichbar ist und mit denen vorteilhafterweise ein Transport der auf mehrere Spulen verteilten Nutzlast zu einem Transportzielort durchführbar ist (siehe auch Fig. 1 bis Fig. 4).

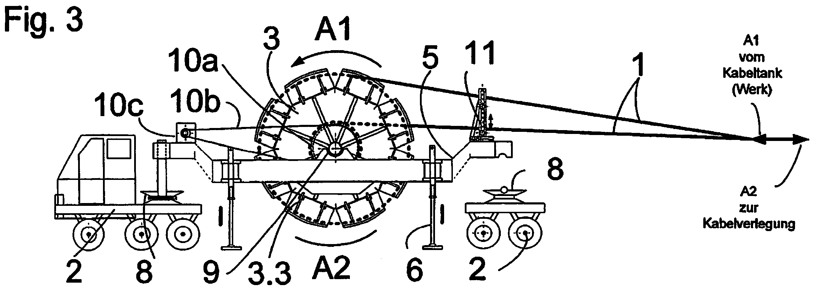

Das erfindungsgemäße mobil eingesetzte Auf-, Um- und/oder Abspulverfahren begünstigt vorteilhafterweise einerseits das erfindungsgemäße Transportverfahren (siehe auch Fig. 1) für den Landtransport ultralanger Kabel und Seile zu einem Transportzielort und andererseits eine wirtschaftliche Bereitstellung solcher Kabel am Verwendungsort/Transportzielort (siehe auch Fig. 3), wie dies insbesondere für Höchstspannungserdkabel für den Ausbau der zukünftigen Höchstspannungs-Übertragungsnetze vorteilhaft ist.

Die wünschenswerte Bereitstellung ultralanger Kabel und Seile in die Nähe des Verlegeorts - bisher im Stand der Technik durch die maximale Transportkapazität einer einzigen Transportspule, mit maximalen Abmessungen für den Landtransport und einer damit begrenzten Transportnutzlast 1a eingeschränkt - wird mit dem erfindungsgemäßen Verfahren vorteilhafterweise derart realisiert, dass zur Beladung von zwei oder mehreren Transportspulen 3 und 4 mit einem einzigen ultralangen Kabel oder Seil, die Gesamtbeladekapazität mindestens einer der beiden Transportspulen vor dem Spulvorgang erhöht werden kann bzw. vergrößerbar ist.

Vorzugsweise wird dies mittels erfindungsgemäßer Anbauelemente oder Vergrößerungselemente 3.3 und 3.4 einer Groß- oder Überlastspulen 3 erreicht, beispielhaft in Fig. 5 bis Fig. 8 dargestellt, die im Wesentlichen der flexiblen Veränderung des Spulenscheibendurchmessers bzw. der flexiblen Vergrößerung der Beladekapazität 1b einer Spule am Belade- bzw. Entladeort der Nutzlast dienen.

Der Verfahrensprozess mit erfindungsgemäßer Auf-, Um- und/oder Abspultechnik beginnt vorteilhafterweise nach erfolgtem Antransport der leeren Spulen auf Spulenträgern 5 bzw. auf Spulentransportfahrzeugen 2 am Transportstartort, beispielsweise bei der Werksbeladung, mit der Versetzung mindestens einer Groß- oder Überlastspule 3 in den Spulmodus 3b und dem Start des Aufspulprozesses (nachfolgend auch Spulprozess A1 genannt) der Nutzlast 1 auf die Groß- oder Überlastspule 3.

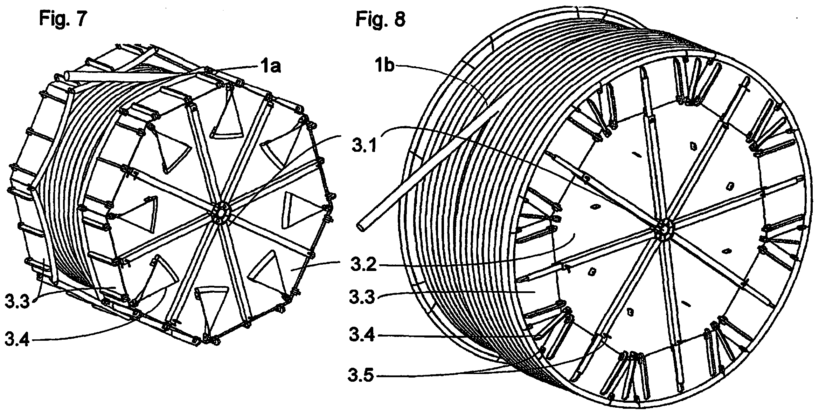

Vorteilhafterweise wird nach dem Erreichen der aufzuspulenden Gesamtnutzlast 1b auf die Groß- oder Überlastspule im Spulmodus 3b (siehe auch Fig. 5 und Fig. 8), die Nutzlastzufuhr, z. B. die Kabelzufuhr aus einem so genannten Kabeltank oder aus der Produktion, gestoppt und das Kabel abgetrennt. Vorteilhafterweise wird vom entstandenen freien Ende der Gesamtnutzlast 1b ausgehend eine Nutzlastteillänge durch Umspulen (nachfolgend auch Spulprozess U1 genannt) auf eine zweite Transportspule 4 so weit, vorzugsweise hälftig, durchgeführt, bis die vorgesehene Transportbeladung 1a beider Spulen erreicht ist und die Groß- oder Überlastspule 3 vor dem Transport wieder in den Transportmodus 3a umgerüstet wird (siehe auch Fig. 1 und Fig. 7).

Die beschriebene erfindungsgemäße Beladung (Spulprozesse A1 und U1) der Spulen 3 und 4 hat vorteilhafterweise zur Folge, dass verfahrensbedingt am Transportzielort zunächst keine freien Enden der Nutzlasteinheit 1 zur direkten Abspulung zur Verfügung stehen (siehe auch Fig. 1). Es folgt der nächste Verfahrensschritt (nachfolgend auch Spulprozess U2 genannt), wenn der Transportzug, z. B. aus zwei Transportfahrzeugen 2 zusammengestellt, die in festem Abstand vorzugsweise mit einem Kopplungselement 2a aneinander gekoppelt sind, mit der verteilten Nutzlast den Transportzielort erreicht hat.

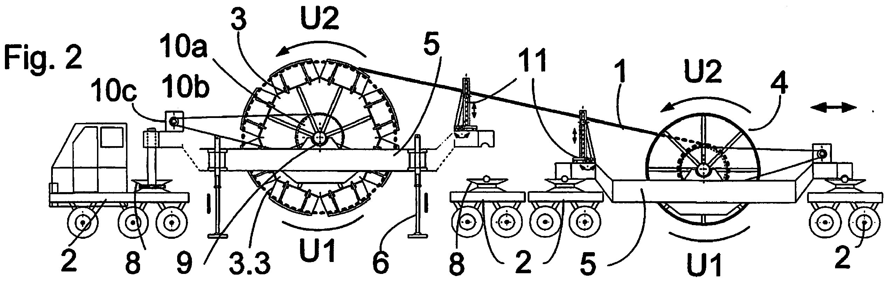

Am Transportzielort wird dazu die Nutzlast vorteilhafterweise von der zweiten Transportspule zunächst wieder auf die als Groß- oder Überlastspule 3 dienende Transportspule umgespult (Spulprozess U2), die dazu vorteilhafterweise zunächst wieder in den Spulmodus 3b umgerüstet wird. Der Spulprozess U2 wird bis zum Erhalt des freien Endes der Nutzlast 1 und vollständigen Entladung der zweiten Transportspule 4 fortgesetzt (siehe auch Fig. 2). Danach ist es vorteilhafterweise ermöglicht, die Gesamtnutzlast 1b, von diesem freien Ende aus, von der Groß- oder Überlastspule 3 vollständig abzuspulen (nachfolgend auch Spulprozess A2 genannt), ohne dass die Groß- oder Überlastspule 3 bzw. das Transportfahrzeug 2 im beladenen Zustand am Standort nochmals fortbewegt werden muss (siehe auch Fig. 3).

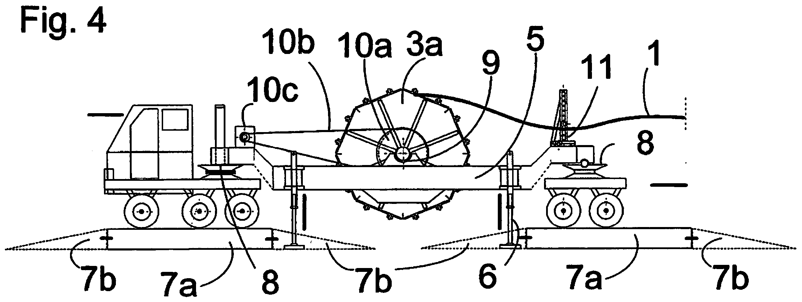

Vorteilhafterweise wird die erfindungsgemäße Umrüstung der Transportspule (siehe auch Fig. 5) zu einer erfindungsgemäßen Groß- oder Überlastspule (siehe auch Fig. 6) und die Sicherstellung des kollisionsfreien Auf- und Umspulens und des Abspulens der Nutzlast 1 auf eine Spule mit größerem Spulenscheibendurchmesser durch erfindungsgemäße Hebe- und Stützvorrichtungen für die Spule und/oder durch Hebe- und Stützvorrichtungen 6 der Spulenträger 5 (siehe auch Fig. 2 und Fig. 3) und/oder durch Hebe- und/oder Stützvorrichtungen der Transportfahrzeuge selbst und/oder durch mobile Rampen 7a und 7b ermöglicht (siehe auch Fig. 4), um dem zeitweise erhöhten Raumbedarf, der benötigten größeren Bodenfreiheit der Groß- oder Überlastspule im Spulmodus 3b und dem zeitweise vergrößerten Gesamtgewicht der Groß- oder Überlastspule Rechnung zu tragen, und um vorteilhafterweise die Rückführung einer Groß- oder Überlastspule auf Transportspulengröße 3a zu ermöglichen, insbesondere um die Randbedingungen für die Transportfähigkeit solcher Spulen auf Straßen zu erfüllen.

Vorteilhafterweise werden zur Herstellung der benötigten Bodenfreiheit für Spulprozesse der Groß- oder Überlastspule auf Spulentransportfahrzeugen für Hebe- und/oder Stützprozesse Hebe- und/oder Stützvorrichtungen verwendet, die entweder die Hebe- und/oder Stützfunktion direkt auf die Achs- und Lagerelemente der Spule und/oder auf die Spulenträger der Transportfahrzeuge übertragen. Vorteilhafterweise sind zur Herstellung der benötigten Bodenfreiheit für Spulprozesse der Groß- oder Überlastspule auf Spulentransportfahrzeugen für Hebeprozesse ferner mobile Rampen oder mobile schiefen Ebenen vorgesehen. Die Hebe- und Stützvorrichtungen 6 und Vorrichtungen wie Rampen 7a und/oder 7b, ermöglichen bzw. vereinfachen als mitgeführte oder als integrierte Bestandteile des Kabeltransportfahrzeugs 2 oder der Spulenträger 5 das erfindungsgemäße Auf- und Umspulen der zu transportierenden Nutzlasten sowohl bei der Beladung z. B. im Herstellerwerk (Spulprozesse A1 und U1) der Nutzlast, als auch insbesondere das Um- und Abspulen ultralanger linienförmiger Nutzlasten an einem beliebigen Transportzielort (Spulprozesse U2 und A2).

Die Verwendung mobiler Rampen 7a und 7b, auf die das Spulenträgerfahrzeug 2 mit der Groß- oder Überlastspule 3 im Transportmodus 3a zunächst entweder mit eigener Kraft fährt oder gezogen wird, hat den besonderen Vorteil, dass andere vorhandene Hubvorrichtungen 6 unter Last keine Hebefunktion mehr, sondern nur noch Stütz- und Haltefunktion erfüllen müssen.

Durch die erfindungsgemäßen Verfahrens- und Vorrichtungslösungen ist es vorteilhafterweise vereinfacht möglich, die Gesamtlänge einer linienförmigen Nutzlast, welche normalerweise nicht mehr auf einer einzigen Spule auf der Straße transportiert werden kann, auf mehrere Spulen zu verteilen, und mittels der erfindungsgemäßen, z. B. für den Straßentransport tauglichen Groß- oder Überlastspule 3, das Auf-, Um- und/oder Abspulen der Gesamtnutzlast 1b am Transportzielort zu realisieren. Ein weiterer Vorteil ist, dass auch z. B. ein ultralanges, schweres Höchstspannungserdkabel am Transportzielort durch Um- und/oder Abspulen dem eigentlichen Montageort oder Verwendungszweck leichter und damit wirtschaftlicher zugeführt werden kann (Spulprozess A2) (siehe auch Fig. 3), z. B. ohne dass Schwerlast-beladene Spulentransportfahrzeuge für den Abspulvorgang der Nutzlast bewegt werden müssen, auf dafür geeigneten ansonsten neu zu errichtenden Zuwegungen. Ferner kann es vorteilhafterweise vermieden werden, dass Kabel zwecks Abspulen zunächst in einer oder in mehreren Schlaufen abgelegt werden müssen, um an ein freies Ende eines doppelt gespulten Kabels zu gelangen.

Insbesondere ist es vorteilig und wirtschaftlich, wenn die erfindungsgemäßen Verfahrens- und Vorrichtungslösungen mit einer Kabelverlegung gemäß der DE 10 2013 102 631 B4 bzw. der EP 2 779 336 A1 erfolgt, bei welchen ein möglichst langes Kabel zunächst auf einen Rollengang oder dergleichen gezogen bzw. mittels erfindungsgemäßem Spulprozess A2 abgespult und darauf ausgelegt wird, bevor es auf diesem schussweise in ein Kabeltragrohr eingeschlossen wird, um es danach, im Kabeltragrohr eingeschlossen, über den Rollengang dem eigentlichen Verlegeort des Erdkabels zuführen zu können, z. B. einem mit Wasser gefluteten Leerrohrsystem, in welches dann das mit dem erfindungsgemäßen Verfahren vorteilhafterweise ultralang bereitgestellte Kabel zugbelastungsfrei in das Leerrohrsystem eingezogen werden kann.

Die erfindungsgemäßen Ausgestaltungen der Groß- oder Überlastspule 3 und Spulentransportfahrzeuge 2 mit ihren Teilvorrichtungen bewirken vorteilhafterweise, dass Spulprozesse auf demselben Transportfahrzeug 2 oder Spulenträger 5 durchgeführt werden können, auf dem der Transport der Spule zum Transportzielort der Nutzlast 1 erfolgt. Dies hat den Vorteil, dass der Einsatz zusätzlicher Krananlagen und Hubvorrichtungen, insbesondere am Transportzielort für das erfindungsgemäße Verfahren in den Verfahrensschritten 4. und 5. nicht erforderlich ist.

Vorteilhafterweise ist vorgesehen, dass die Groß- oder Überlastspule sowie die Transportspule insbesondere für Spulvorgänge auf dem Spulenträger drehbar gelagert ist. Die Lagerung 9 erfolgt, wie insbesondere in den Fig. 1 bis Fig.4 beispielhaft dargestellt - vorteilhafterweise achsgestützt, über die jeweiligen Achs- und Lagerelemente 9 der Spulen und Spulenträger, die insbesondere für die maximalen Gesamtgewichte der beladenen Spulen 3 und 4 ausgelegt sind.

Die Groß- oder Überlastspule 3 sowie die Transportspule 4 werden für die unterschiedlichen Spulvorgänge vorteilhafterweise angetrieben. Die dazu erforderlichen Drehmomente bzw. Antriebskräfte werden je nach Ausführung der Groß- oder Überlastspule vorteilhafterweise entweder mittels Direktantrieb auf die Drehachse der Spulen oder mittels Reibrad auf die umlaufenden, äußeren Führungsringe der Spulen oder mittels Kettenrad und Kette oder mittels Zahnrad und Zahnriemen oder mittels separater oder integrierter Seilscheibe 10a und Seil 10b, wie in den Fig. 1 bis Fig. 4 beispielhaft dargestellt, auf die Spule übertragen. Die Antriebsaggregate 10c zu den jeweiligen Ausführungen sind vorteilhafterweise auf den Spulenträgern 5 oder auf den Spulentransportfahrzeugen 2 installiert. Ferner sind in einer erfindungsgemäßen Ausgestaltung vorzugsweise mobile Anbauaggregate vorgesehen, mit denen flexibel die erfindungsgemäßen Auf-, Um- und/oder Abspulprozesse realisiert werden, sowohl am Transportstartort, z. B. im Herstellerwerk, als auch am Transportzielort eines Spulentransports sowie während des Transports, z. B. bei der Notwendigkeit der Umspulung der Nutzlast zur Beachtung der Belastungsgrenzen zu befahrener Brückenbauwerke.

Eine weitere vorteilhafte Ausgestaltung der Erfindung sieht vor, dass während des Verfahrensschritts 3., insbesondere zur Überfahrung von Bauwerken oder Verkehrswegabschnitten, bei denen die zulässige Verkehrslast kleiner ist als das Gesamtgewicht des Transportzugs, die Transporteinheiten abgekoppelt und getrennt werden. Vorteilhafterweise wird dabei bzw. dazu mindestens eine solche Nutzlastlänge und solches Nutzlastgewicht von mindestens einer Transportspule soweit abgespult, dass die zulässige Verkehrslast der einzelnen Transporteinheiten beim Überfahren auch solcher Bauwerke oder Verkehrswegabschnitte die zulässige Verkehrslast nicht überschreitet.

Eine weitere vorteilhafte Ausgestaltung der Erfindung sieht vor, dass während des Verfahrensschritts 3., insbesondere zur Überfahrung von Bauwerken oder Verkehrswegabschnitten, bei denen die zulässige Verkehrslast kleiner ist als das Gesamtgewicht des Transportzugs, die Gesamtnutzlast bei der Anwendung des erfindungsgemäßen Verfahrens auf zwei Groß- oder Überlastspulen, vorzugsweise einer in Fahrtrichtung vorderen und einer in Fahrtrichtung hinteren Spule, für den Transport verteilt wird, und die Umspulprozesse U1 und U2 als Zwischenschritte auch während des Verfahrensschritts 3., insbesondere zur Überfahrung solcher Bauwerke oder Verkehrswegabschnitte angewendet werden, vorteilhafterweise indem
- zunächst zur Entlastung des vorderen Transportfahrzeugs im Spulmodus der verwendeten Groß- oder Überlastspulen mit U1 eine Teilnutzlast von der vorderen auf die hintere Groß- oder Überlastspule umgespult wird,
- anschließend die Überfahrung des Bauwerks oder Verkehrswegabschnitts vom vorderen Transportfahrzeug mit reduziertem Gesamtgewicht im wieder hergestellten Transportmodus erfolgt, währenddessen die notwendige Überbrückungslänge der Nutzlast zwischen den abgekuppelten Transporteinheiten von der hinteren Spule wieder abgespult und von der ersten Spule mit gleicher Geschwindigkeit bei der Überfahrung mitgenommen wird oder von der ersten Spule zusätzlich während der Überfahrung abgespult wird,
- anschließend im Spulmodus die Gewichtsentlastung der hinteren Spule, auf die erste Spule mit U2 erfolgt,
- anschließend die Überfahrung des zu überbrückenden Verkehrswegabschnitts vom hinteren Transportfahrzeug mit reduziertem Gesamtgewicht im Transportmodus der Spule erfolgt und währenddessen auch die Überbrückungslänge der Nutzlast auf die vordere Spule im Spulmodus rückgespult oder von der hinteren Spule während der Überfahrung aufgespult und aufgenommen wird,
- anschließend, erneut die Verteilung der Nutzlast gemäß U2 im Spulmodus beider Spulen durchgeführt wird, und
- abschließend der Transportmodus der Spulen hergestellt, die Ankupplung der Transportfahrzeuge durchgeführt und der Transport des Transportzugs fortgesetzt werden.

Eine weitere vorteilhafte Ausgestaltung der Erfindung sieht Groß- oder Überlastspulen mit Vorrichtungen als Anbauelemente vor, die dadurch gekennzeichnet sind, dass diese von der Transportspule nach dem Spulprozess oder während des Rückspulvorgangs wieder demontiert oder entnommen werden. Insbesondere zur Vergrößerung der Spulenbeladekapazität bei nicht selbstsichernder Nutzlast sieht eine weitere vorteilhafte Ausgestaltung der Erfindung an mindestens einer der beiden Transportspulen, die vorzugsweise auch als Groß- oder Überlastspule einsetzbar ist, zusätzliche Anbauelemente vor, die zur Vergrößerung des wirksamen Spulenscheibendurchmessers befestigt werden bzw. befestigbar sind. Vorteilhafterweise sind die zusätzlichen Anbauelemente nach den Verfahrensschritten 1., 2., 4. und/oder 5. zur Durchführung des Transports gemäß Verfahrensschritt 3., wieder lösbar und von der Spule getrennt separiert transportierbar.

Vorteilhafterweise werden insbesondere zur Vergrößerung der Spulenbeladekapazität bei nicht selbstsichernder Nutzlast Spannelemente verwendet, vorzugsweise derart, dass diese durch gegenseitiges Verspannen mit dem gegenüberliegenden Spulenflansch diese gegen Verbiegung in Position halten, entgegenwirkend den nach außen gerichteten Kräften durch die Nutzlast. In einer weiteren vorteilhaften Ausgestaltung der Erfindung werden insbesondere zur Kapazitätserhöhung einer Transportspule zu einer Groß- oder Überlastspule während der zwischenzeitlichen Überschreitung der normalen Transportspulenkapazität, während der Aufspulprozesse vorteilhafterweise Spann-, Einlege- bzw. Klemmelemente verwendet, welche vorzugsweise im Randbereich der einzelnen Lagen des Wickelprofiles so platziert werden bzw. platzierbar sind, dass diese durch Formschluss mit der Nutzlast und durch das Gewicht der benachbarten Nutzlastlagen die Eigensicherung des Überlastwickelprofils bewirken, insbesondere auch ohne den zusätzlichen Einsatz von Anbauelementen oder Vergrößerungselementen an den Spulenscheiben. In einer weiteren vorteilhaften Ausgestaltung der Erfindung werden Vorrichtungen verwendet, die als Spannelemente ausgeführt sind, wobei diese durch gegenseitiges Verspannen der Spulenflanschen diese gegen Verbiegung in Position halten, entgegenwirkend den nach außen gerichteten Kräften durch die Nutzlast. Vorteilhafterweise sind insbesondere zur Vergrößerung der Spulenbeladekapazität bei nicht selbstsichernder Nutzlast Spannelemente vorgesehen, die durch gegenseitiges Verspannen mit dem gegenüberliegenden Spulenflansch diese gegen Verbiegung in Position halten, entgegenwirkend den nach außen gerichteten Kräften durch die Nutzlast.

Vorzugsweise sind jedoch wie beispielhaft dargestellt, erfindungsgemäße Groß- oder Überlastspulen (siehe auch Fig. 5, Fig. 6, Fig. 7 und Fig. 8) mit Vergrößerungselementen ausgestattet und dadurch gekennzeichnet, dass diese vorteilhafterweise nach Beendigung der Auf-, Um- und/oder Abspulprozesse auch während des Transports der Nutzlast und beim Leertransport mit der Spule verbunden bleiben (vergleiche auch nachfolgende Aspekte 1 bis 11 und 13 der Erfindung), jedoch in Transportstellung, mit dazu wieder hergestelltem kleineren Spulenscheibendurchmesser (Transportspulendurchmesser) der Spule (siehe auch Fig. 5 und Fig. 7). Vergrößerungselemente werden vorzugsweise durch manuelle Betätigung oder aber auch durch elektromechanische oder hydraulische Unterstützung wahlweise, je nach Erfordernis in den Verfahrensschritten 1., 2., 3., 4. und 5. in den Transportmodus 3a oder in den Spulmodus 3b der Groß- oder Überlastspule 3 gebracht.

Vorzugsweise sind ferner Spulenscheiben dazu mit erfindungsgemäßen Vergrößerungselementen 3.3 und 3.4 ausgestattet, wobei diese vorzugsweise zunächst radial nach außen geklappt in den Spulmodus und anschließend mit Bolzen 3.5 oder Riegeln untereinander so verbunden werden, dass die Vergrößerungselemente 3.3 und 3.4 vorteilhafterweise einen flächigen geschlossenen Ring bilden (siehe auch Fig. 8).

Vorteilhafterweise können nach Bedarf erfindungsgemäße Vergrößerungselemente 3.3 und 3.4 mit Spannelementen (siehe auch nachfolgenden Aspekt 15 der Erfindung) gesichert werden, wobei diese durch gegenseitiges Verspannen mit dem gegenüberliegenden Spulenflanschen diese gegen Verbiegung in Position halten, entgegenwirkend den nach außen gerichteten Kräften durch die Nutzlast.

Im eingeklappten Zustand, also im Transportmodus 3a der Groß- oder Überlastspule 3 werden erfindungsgemäße Vergrößerungselemente 3.3 und 3.4 vorteilhafterweise gegen unbeabsichtigtes Ausklappen vorzugsweise mit Bolzen 3.5 gesichert.

Eine z. B. auf zwei oder mehrere Transportspulen aufgespulte Nutzlasteinheit wird vorteilhafterweise mittels mindestens einem Nutzlasttransportfahrzeug, jedoch durch die Nutzlast verbunden, zum Zielort transportiert. Dabei ist es für das erfindungsgemäße Verfahren unerheblich ob die Drehachsen der Spulen in Transportrichtung oder wie in den Fig. 1 bis Fig. 4 dargestellt, senkrecht zur Transportrichtung liegen bzw. angeordnet sind.

In einer weiteren vorteilhaften Ausgestaltung der Erfindung kann die Nutzlast auf mehr als zwei Transportspulen verteilt werden, wenn dazu ab der dritten Transportspule diese als Doppelspule ausgeführt ist, mit zusätzlicher innen liegender Spulenscheibe. Bevorzugt ist dabei vorgesehen, dass für die Verteilung der Nutzlast, wenn sie z. B. auf drei Transportspulen (siehe auch nachfolgende Aspekte 10 und 11 der Erfindung) erfolgen soll, zunächst die Anwendung des erfindungsgemäßen Verfahrens mit der Beladung zweier, vorteilhafterweise für die jeweiligen Beladungszustände bemessenen und erfindungsgemäß ausgestatteten Groß- oder Überlastspulen erfolgt, bevor die dritte Transportspule, die vorteilhafterweise ebenso Transportfahrzeug gelagert ist, beladen wird.

Zur Beladung der dritten Transportspule, ausgeführt als Doppelspule mit innen angeordneter Spulenscheibe, wird die Nutzlast vorteilhafterweise mit einer die beiden Spulenhälften verbindenden Nutzlastschlaufe in der Doppelspule so befestigt, vorzugsweise derart, dass beim folgenden Aufspulprozess der Doppelspule die Nutzlast gleichzeitig von den beiden zuvor beladenen Groß- oder Überlastspulen abgespult wird und entsprechend die beiden Kammern der Doppelspule parallel beladen und gefüllt werden, bis die Sollbeladung der Doppelspule erreicht ist und die Transportfähigkeit der verbliebenen Nutzlast auch auf den Groß- oder Überlastspulen im Transportmodus hergestellt ist.

Um die Transporttauglichkeit der Transportspulen und der Gesamtnutzlast verteilt auf drei Transportspulen herzustellen, werden danach die zwei Groß- oder Überlastspulen vorteilhafterweise in den Transportmodus rückgeführt, bevor der Transport zum Transportzielort erfolgt.

Nach Erreichung des Transportzielorts der auf drei Spulen verteilten Nutzlast sieht das Verfahren insbesondere (vergleiche auch nachfolgend Aspekt 10 der Erfindung) vor, dass die Gesamtnutzlast zunächst wieder auf die zwei auch wieder zu Groß- oder Überlastspulen umgerüsteten Transportspulen umgespult wird und abschließend die Gesamtnutzlast auf nur eine der Groß- oder Überlastspulen gemäß dem Verfahren aufgespult wird, um sie von dort dem Verwendungszweck zuführen zu können.

Grundsätzlich ist es für die vorliegende Erfindung unerheblich auf wie vielen Transportspulen die Nutzlast vor dem Transport durch erfindungsgemäße Spulprozesse auf erfindungsgemäßen Spulen und Transportfahrzeugen verteilt wird (vergleiche auch nachfolgend Aspekt 10 und 11 der Erfindung).

Der Transport der Transportspulen wird vorzugsweise mittels Transportzug oder Transportkonvoi durchgeführt, bei dem die Anzahl von Transportfahrzeugen vorzugsweise der der zu transportierenden Spulen entspricht, auf die die Gesamtnutzlast erfindungsgemäß zuvor verteilt worden ist, z. B. ebenfalls mittels zweier, durch Kupplungsvorrichtung 2a voneinander trennbarer Spulentransportfahrzeuge 2 oder -fahrgestelle 2, die mit technisch kompatiblen Spulenträger-Adaptervorrichtungen 8 mit den Spulenträgern 5 verbunden sind (vergleiche auch nachfolgend Aspekt 6 der Erfindung).

Dies hat insbesondere den Vorteil, dass zum erneuten Um- bzw. Aufspulen der Nutzlast 1 die Transportfahrzeuge 2 oder Fahrgestelle 2 mit den Spulenträgern 5 nach Lösen der Kupplung 2a voneinander so weit getrennt werden können, dass z.

B. der Spulprozess U2 (siehe auch Fig. 2) der Nutzlast 1 am Transportzielort auf die Groß- oder Überlastspule 3b weitgehend ohne Schrägzug der Nutzlast 1 erfolgen kann.

Mobile oder vorteilhafterweise und erfindungsgemäß auf den Spulenträgern montierte Changiervorrichtungen 11 (siehe auch Fig. 1 bis Fig. 4) tragen zusätzlich der Forderung Rechnung, Spulprozesse der Nutzlast 1 von einer auf eine andere Spule präzise führen zu können, um Unregelmäßigkeiten und Störungen des Wickelprofils zu vermeiden. Darüber hinaus ermöglichen auch während des Transports verfügbare Changiervorrichtungen 11 vorteilhafterweise, dass auch im Bereich zwischen zwei miteinander durch die Nutzlast verbundener Spulentransportfahrzeuge (Transportkonvoi) bei Kurvenfahrten die maximal zulässige Ausladung der Nutzlast 1 zur Kurveninnenseite nicht überschritten wird und die Nutzlast selbst vor Beschädigungen besser geschützt werden kann (siehe auch nachfolgend Aspekt 19 der Erfindung).

Spulenträger-Adaptervorrichtungen 8 sind das Bindeglied zwischen erfindungsgemäßen Spulenträgern 2 und herkömmlichen Straßen- oder Schienenfahrzeugen 2, insbesondere damit der Transport erfindungsgemäßer Spulen 3 sowohl auf Straßentransportfahrzeugen 2 als auch auf Schienenfahrzeugen erfolgen kann. Solche Spulenträger-Adaptervorrichtungen 8 sind jeweils angepasste Vorrichtungen für Straßentransportfahrzeuge als auch für Schienenfahrzeuge und deren herkömmliche Dreh- und Auflagergestelle 2, die die Verladung und Kopplung des Spulenträgers 5 vereinfachen und den Rad-Schiene-Transport sowie den Wechsel von Schiene auf Rad und umgekehrt für einen gemischten Transportprozess von Spulen gemäß dem erfindungsgemäßen Verfahren begünstigen (vergleiche auch nachfolgende Aspekte 9 und 18 der Erfindung).

Der gesamte erfindungsgemäße Zyklus des erfindungsgemäßen Verfahrens, vergleiche insbesondere auch nachfolgenden Aspekt 1 der Erfindung, lässt sich vorteilhafterweise wie folgt in acht Teilprozesse gliedern:

### Teilprozess 1:

### Start nach Ende Teilprozess 8

" Leertransport der Spulen"
a) Transportzug der Transportfahrzeuge mit leeren Spulen zusammenstellen
   und
b) Anfahrt zum Produktions- oder Lagerort der linienförmigen Nutzlast, z. B. in die Nähe eines Kabeltanks zur Aufnahme der Nutzlast.

Voraussetzung: Spulen 3 und 4 sowie Hebe- und Stützvorrichtungen 6 der Spulenträger 5 und des Spulentransportfahrzeugs 2 sind im Transportmodus.

### Teilprozess 2 (Verfahrensschritt 1.)

"Aufnahme der Nutzlast am Transportstartort (Aufspulprozess A1)"
- "Bereitstellung des Überlastmodus der Groß- oder Überlastspule zur Werksbeladung".

Voraussetzungen: Hebe- und Stützvorrichtungen 6 der Spulenträger 5 und des Spulentransportfahrzeug 2 sind ausgefahren sowie Groß- oder Überlastspule im Spul-/Überlastmodus 3b.

### Teilprozess 3 (Verfahrensschritt 1.)

"Aufnahme der Nutzlast am Transportstartort (Aufspulprozess A1)"
- "Aufspulen auf Groß- oder Überlastspule (Werksbeladung)" am Produktions- oder Lagerort, z. B. Kabelentnahme aus einem Kabeltank.

Voraussetzungen: Hebe- und Stützvorrichtungen 6 der Spulenträger 5 und des Spulentransportfahrzeugs 2 sind ausgefahren sowie Groß- oder Überlastspule im Spul-/Überlastmodus 3b, Spulenantrieb 10a, 10b, 10c im Spulmodus, Changiervorrichtung 11 im Nachführmodus (siehe auch Fig. 3).

### Teilprozess 4 (Verfahrensschritt 2.)

"Verteilung der Nutzlast durch Abgabe einer Teilnutzlast (Umspulprozess U1)"
- "Umspulen (Werksbeladung)" einer Teillast von der Groß- oder Überlastspule auf die zweite Transportspule am Produktions- oder Lagerort.

Voraussetzung: Hebe- und Stützvorrichtungen 6 der Spulenträger 5 und des Spulentransportfahrzeugs 2 sind ausgefahren sowie Groß- oder Überlastspule im Spul-/Überlastmodus 3b, Spulenantrieb 10a, 10b, 10c im Spulmodus, Changiervorrichtungen auf Transportfahrzeugen 11 im Nachführmodus (siehe auch Fig. 2).

### Teilprozess 5 (Verfahrensschritt 3.)

"Transport der geteilten Gesamtnutzlast"
- " Landtransport" der Nutzlast.

Voraussetzung: Hebe- und Stützvorrichtungen 6 der Spulenträger 5 und des Spulentransportfahrzeugs 2 sind eingefahren, Groß- oder Überlastspule ist im Transportmodus 3a, Spulentransportfahrzeuge 2 im Konvoimodus (siehe auch Fig. 1).

### Teilprozess 6 (Verfahrensschritt 4.)

"Rückspulen der abgegebenen Teilnutzlast (Umspulprozess U2)"
- "Bereitstellung des Überlastmodus zur Umspulung der Teilnutzlast am Transportzielort" im Teillast beladenen Zustand der Groß- oder Überlastspule."

Voraussetzung: Hebe- und Stützvorrichtungen 6 der Spulenträger 5 und des Spulentransportfahrzeugs 2 unter Last sind ausgefahren sowie Groß- oder Überlastspule ist im Spul-/Überlastmodus 3b.

### Teilprozess 7 (Verfahrensschritt 4.)

"Rückspulen der abgegebenen Teilnutzlast (Umspulprozess U2)"
- "Umspulen der Teilnutzlast am Transportzielort" von der zweiten Transportspule auf die Groß- oder Überlastspule am Transportzielort.

Voraussetzung: Hebe- und Stützvorrichtungen 6 der Spulenträger 2 und des Spulentransportfahrzeugs ausgefahren sowie Groß- oder Überlastspule im Spul-/Überlastmodus 3b, Spulenantrieb 10a, 10b, 10c im Spulmodus, Changiervorrichtung 11 im Nachführmodus (siehe auch Fig. 2).

### Teilprozess 8 (Verfahrensschritt 5.)

"Bereitstellung und Abgabe der Gesamtnutzlast am Transportzielort (Abspulprozess A2)"
- "Abspulen der Gesamtnutzlast am Transportzielort" von der Groß- oder Überlastspule am Transportzielort".

Voraussetzung: Hebe- und Stützvorrichtungen 6 der Spulenträger 5 und des Spulentransportfahrzeugs 2 sind ausgefahren sowie Groß- oder Überlastspule im Spul-/Überlastmodus 3b, Spulenantrieb 10a, 10b, 10c im Spulmodus, Changiervorrichtung 11 im Nachführmodus (siehe auch Fig. 3).

In Fig. 1 bis Fig. 4 ist ein bevorzugtes Ausführungsbeispiel der Erfindung beispielhaft mit einer Groß- oder Überlastspule 3 und einer Transportspule 4 dargestellt. Die Spulen 3 und 4 weisen im Wesentlichen gleiche Grundabmessungen auf und sind jeweils auf Spulenträgern 5 und Fahrgestellen von zwei Spulentransportfahrzeugen 2 (Straßentransport) gelagert. Die Darstellungen sind sowohl im Transportmodus als auch im Spul-/Überlastmodus, in denen auch die Spulprozesse A1, A2, U1 und U2 dargestellt sind.
Fig. 1 zeigt einen Transportzug im Verfahrensschritt 3 "Transport der geteilten Gesamtnutzlast" für den Landtransport der Nutzlast auf Straßenfahrzeugen, mit beispielhaften Vorrichtungen und Zusatzvorrichtungen für das erfindungsgemäße Verfahren.
Fig. 2 zeigt einen Transportzug mit beispielhaften Vorrichtungen und Zusatzvorrichtungen für das erfindungsgemäße Verfahren:
   a) im Verfahrensschritt 2. "Verteilung der Nutzlast durch Abgabe einer Teilnutzlast (Umspulprozess U1)", beispielhaft für eine Werksbeladung einer Teilnutzlast von der Groß- oder Überlastspule auf die zweite Transportspule am Produktions- oder Lagerort;
   b) im Verfahrensschritt 4. "Rückspulen der abgegebenen Teilnutzlast (Umspulprozess U2)" beispielhaft für einen Rückspulprozess einer Teilnutzlast von der zweiten Transportspule auf die Groß- oder Überlastspule am Transportzielort.
Fig. 3 zeigt ein mit Groß- oder Überlastspule beladenes Spulentransportfahrzeug mit Groß- oder Überlastspule im Spulmodus 3b mit beispielhaften Vorrichtungen und Zusatzvorrichtungen für das erfindungsgemäße Verfahren wie Stütz-und Hebevorrichtungen zur Erzeugung der zeitweise benötigten größeren Bodenfreiheit für Spulprozesse der Groß- oder Überlastspule:
   a) im Verfahrensschritt 1. "Aufnahme der Nutzlast am Transportstartort (Aufspulprozess A1)" beispielhaft für eine Werksbeladung einer Gesamtnutzlast auf eine Groß- oder Überlastspule am Produktions- oder Lagerort, z. B. zur Kabelentnahme aus einem Kabeltank.
   b) im Verfahrensschritt 5. "Bereitstellung und Abgabe der Nutzlast am Transportzielort (Abspulprozess A2)" beispielhaft für einen Abspulprozess einer Gesamtnutzlast am Transportzielort, z. B. zur Bereitstellung ultralanger Kabel für eine Kabelverlegung gemäß der DE 10 2013 102 631 B4 bzw. der EP 2 779 336 A1.
Fig. 4 zeigt ähnlich wie in Fig. 2 und Fig. 3 ein mit Groß- oder Überlastspule beladenes Spulentransportfahrzeug mit Groß- oder Überlastspule im Transportmodus 3b mit beispielhaften Vorrichtungen und Zusatzvorrichtungen für das erfindungsgemäße Verfahren wie Stützvorrichtungen 6 jedoch mit Hebevorrichtungen in Form mobiler Rampen 7a und mobiler schiefer Ebenen 7b zur Erzeugung der zeitweise benötigten größeren Bodenfreiheit für Spulprozesse der Groß- oder Überlastspule 3 am Ende des Verfahrensschritts 3. "Transport der geteilten Gesamtnutzlast" und zur Vorbereitung des Verfahrensschritts 4. "Rückspulen der abgegebenen Teilnutzlast (Umspulprozess U2)" beispielhaft für die Vorbereitung eines Umspulprozesses (U2) einer Teilnutzlast am Transportzielort.
   In dieser bevorzugten Variante können Spulentransportfahrzeuge zunächst mit der Nutzlast fahren oder gezogen werden, bevor die weitergehende Abstützung der Spulenträger 5 zur späteren Lastabtragung des zusätzlichen Gewichts aus der Nutzlast der Transportspule 4 mit Stützvorrichtungen 6 erfolgt. Stützvorrichtungen müssen somit keine Hubarbeit leisten.
Fig. 5 zeigt einen Längsschnitt und das Prinzip einer erfindungsgemäßen Groß- oder Überlastspule 3 im Transportmodus 3a, beispielhaft mit nach innen eingeklappten Vergrößerungselementen 3.3 und 3.4 und beladen mit der Transportnutzlast 8a einer Transportspule 4.
Fig. 6 zeigt einen Längsschnitt und das Prinzip einer erfindungsgemäßen Groß- oder Überlastspule 3 im Spul-/Überlastmodus 3b, beispielhaft mit aufgeklappten Vergrößerungselementen 3.3 und 3.) und beladen mit der Gesamtnutzlast 8b.
In Fig. 7 und Fig. 8 ist die bevorzugte Ausgestaltung einer erfindungsgemäßen Groß- oder Überlastspule dargestellt.
   Fig. 7 zeigt eine Groß- oder Überlastspule im Transportmodus, mit eingeklappten erfindungsgemäßen Vorrichtungen zur Vergrößerung des Spulenscheibendurchmessers.
Fig. 8 zeigt eine Groß- oder Überlastspule 3 im Spulmodus 3b, bestehend aus Spulenkern mit Spulenachse 3.1 und Spulenscheiben 3.2 mit Vorrichtungen zur Vergrößerung des Spulenscheibendurchmessers, die an den Spulenscheiben 3.2 angeordnet sind, beispielhaft in Form von Scheibenelementen 3.3 und 3.4, die klappbar an den Spulenscheiben angeordnet und vorzugsweise mit Bolzen 3.5 befestigt sind, wobei die klappbaren Scheibenelemente im aufgeklappten Spulmodus bevorzugt einen vollflächigen, umlaufenden Scheibenring ergeben, der vorteilhafterweise zur Übertragung der Antriebskräfte eines Reibradantriebs genutzt werden kann, um die notwendigen Drehmomente für die Spulprozesse auf die Spulenscheiben übertragen zu können und um z. B. eine leere Groß- oder Überlastspule im aufgeklappten Spulmodus über die Spulenscheiben ohne axiale Unterstützung rollen zu können.

Die in den Figuren der Zeichnung dargestellten Ausführungsbeispiele und die im Zusammenhang mit diesen beschriebenen Ausführungsbeispielen der Erfindung dienen lediglich der Erläuterung der Erfindung und sind für diese nicht beschränkend.

Weitere vorteilhafte Aspekte der Erfindung, welche deren Schutzbereich jedoch nicht definieren, sind wie folgt gegeben:

Verfahren/Vorrichtungen zur Bereitstellung linienförmiger Nutzlasten, insbesondere langer Kabel großen Durchmessers und Gewichts, mit bzw. zur Realisierung der folgenden Schritte und Spulprozesse:
1. Aufnahme der Nutzlast am Transportstartort (Aufspulprozess A1),
2. Verteilung der Nutzlast durch Abgabe einer Teilnutzlast (Umspulprozess U1),
3. Transport der geteilten Gesamtnutzlast,
4. Rückspulen der abgegebenen Teilnutzlast (Umspulprozess U2)
   und
5. Bereitstellung und Abgabe der Gesamtnutzlast am Transportzielort (Abspulprozess A2).

Vorzugsweise wird dabei im Schritt 1. die Nutzlast, vorzugsweise die Gesamtnutzlast, zunächst auf eine Transportspule aufgespult (A1), im Schritt 2. ein Teil der Nutzlast durch Umspulen (U1) auf mindestens eine zweite Transportspule abgegeben, im Schritt 3. die so geteilte Gesamtnutzlast mittels mindestens zweier Transportspulen, auf mindestens einem Transportfahrzeug transportiert, im Schritt 4. die geteilte Nutzlast durch Rückspulen wieder auf nur eine Spule umgespult (U2), und im Schritt 5. mit einem wieder verfügbaren freien Ende die Gesamtnutzlast zum Abspulen am Transportzielort bereitgestellt (A2).

Für die Schritte 1., 2., 4. und 5. wird mindestens eine der verwendeten Transportspulen, zu einer Groß- oder Überlastspule umgerüstet in den Spulmodus versetzt und diese für den Schritt 3. in den Transportmodus zurückversetzt.

Vorzugsweise wird dabei vorbereitend zur Durchführung der Schritte 1., 2., 4. und 5. die Funktionsumwandlung einer Transportspule in eine Groß- oder Überlastspule mittels Vorrichtungen zur Vergrößerung der Spulenbeladekapazität erreicht.

Die verwendeten Groß- oder Überlastspulen und/oder Transportspulen sind für die Schritte 1., 2., 3., 4. und 5. auf den Spulenträgern der Spulentransportfahrzeuge drehbar gelagert.

Vorzugsweise ist dabei das Spulentransportfahrzeug darüber hinaus mit Vorrichtungen so ausgerüstet, dass die Spulprozesse gemäß Aspekt 1 und/oder Aspekt 2 auch unabhängig vom Durchführungsort der Spulprozesse, auf dem Spulentransportfahrzeug selbst durchgeführt werden können und dazu, ebenso unabhängig vom Durchführungsort der Spulprozesse, die benötigte größere Bodenfreiheit im Spulmodus, bei vergrößertem Spulenscheibendurchmesser sowie der benötigte Freiraum für kollisionsfreie Spulprozesse A1, A2, U1 und U2 erzeugbar ist.

Die verwendeten Groß- oder Überlastspulen und/oder Transportspulen, die auf Spulentransportfahrzeugen drehbar gelagert sind, sind zur Erzeugung und Aufrechterhaltung der benötigten Spulprozesse für die Schritte 1., 2., 3. und 4. mit einem Drehantrieb ausgerüstet.

Die verwendeten Spulentransportfahrzeuge für Groß- oder Überlastspulen für die Schritte 1., 2. und 4. weisen Vorrichtungen zur Gewichtsabtragung des zeitweilig überhöhten Gewichts im Überlastmodus auf.

Die Anzahl der verwendeten Spulentransportfahrzeuge ist vorzugsweise identisch mit der Anzahl der zu transportierenden Spulen, insbesondere dass so für den Transport ein Transportzug oder Transportkonvoi für den Schritt 3. gebildet wird bzw. bildbar ist.

Vorzugsweise ist dabei ein Spulentransportfahrzeug in der Definition eine für den Transport entkoppelbare fahrbare Transporteinheit, auf der nur eine einzige Spule gelagert und transportiert wird bzw. lagerbar und transportierbar ist.

Während des Schritts 3., insbesondere zur Überfahrung von Bauwerken oder Verkehrswegabschnitten, bei denen die zulässige Verkehrslast kleiner ist als das Gesamtgewicht des Transportzugs, werden die Transporteinheiten abgekoppelt und getrennt.

Vorzugsweise ist bzw. wird dabei mindestens eine solche Nutzlastlänge und solches Nutzlastgewicht von mindestens einer Transportspule soweit abgespult, dass die zulässige Verkehrslast der einzelnen Transporteinheiten beim Überfahren auch solcher Bauwerke oder Verkehrswegabschnitte die zulässige Verkehrslast nicht überschreitet.

Während des Schritts 3., insbesondere zur Überfahrung von Bauwerken oder Verkehrswegabschnitten, bei denen die zulässige Verkehrslast kleiner ist als das Gesamtgewicht des Transportzugs, wird die Gesamtnutzlast bei der Anwendung auf zwei Groß- oder Überlastspulen, einer in Fahrtrichtung vorderen und einer in Fahrtrichtung hinteren Spule, für den Transport verteilt.

Vorteilhafterweise werden ferner die Umspulprozesse U1 und U2 als Zwischenschritte auch während des Schritts 3., insbesondere zur Überfahrung solcher Bauwerke oder Verkehrswegabschnitte angewendet, vorzugsweise indem
- zunächst zur Entlastung des vorderen Transportfahrzeugs im Spulmodus der verwendeten Groß- oder Überlastspulen mit U1 eine Teilnutzlast von der vorderen auf die hintere Groß- oder Überlastspule umgespult wird,
- anschließend die Überfahrung des Bauwerks oder Verkehrswegabschnitts vom vorderen Transportfahrzeug mit reduziertem Gesamtgewicht im wieder hergestellten Transportmodus erfolgt, währenddessen die notwendige Überbrückungslänge der Nutzlast zwischen den abgekuppelten Transporteinheiten von der hinteren Spule wieder abgespult und von der ersten Spule mit gleicher Geschwindigkeit bei der Überfahrung mitgenommen wird oder von der ersten Spule zusätzlich während der Überfahrung abgespult wird,
- anschließend im Spulmodus die Gewichtsentlastung der hinteren Spule, auf die erste Spule mit U2 erfolgt,
- anschließend die Überfahrung des zu überbrückenden Verkehrswegabschnitts vom hinteren Transportfahrzeug mit reduziertem Gesamtgewicht im Transportmodus der Spule erfolgt und währenddessen auch die Überbrückungslänge der Nutzlast auf die vordere Spule im Spulmodus rückgespult oder von der hinteren Spule während der Überfahrung aufgespult und aufgenommen wird,
- anschließend, erneut die Verteilung der Nutzlast gemäß U2 im Spulmodus beider Spulen durchgeführt wird,
   und
- abschließend der Transportmodus der Spulen hergestellt, die Ankupplung der Transportfahrzeuge durchgeführt und der Transport des Transportzugs fortgesetzt werden.

Schritt 3. kann als Landtransport sowohl auf Straßentransportfahrzeugen als auch auf Schienenfahrzeugen erfolgen, wobei vorzugsweise mit Spulenträger-Adaptervorrichtungen für Straßentransportfahrzeuge und Schienenfahrzeuge auch der wechselnde Rad-Schiene-Transport ermöglicht wird bzw. ermöglichbar ist.

Die Verteilung der Gesamtnutzlast gemäß den Schritten 1. und 2. erfolgt auf mehr als zwei Transportspulen. Bei der Beladung und Verteilung der Nutzlast, wenn sie auf drei Transportspulen gemäß diesem Aspekt erfolgen soll, erfolgt zunächst die Beladung zweier Groß- oder Überlastspulen mit A1 und U1, bevor die dritte Transportspule als Zwischenspule beladen wird. Nach dem Transport, dem Schritt 3., wird die auf drei Spulen verteilte Nutzlast im Schritt 4. zunächst von der Zwischenspule wieder auf die zwei zu Groß- oder Uberlastspulen erneut umgerüsteten Transportspulen umgespult und verteilt. Abschließend wird die Gesamtnutzlast auf nur noch eine der Groß- oder Überlastspulen mit U2 umgespult, um sie einem Verwendungszweck durch Abspulen A2 von einem freien Ende aus zuführen zu können.

Die dritte und jede weitere der verwendeten Transportspulen ist mit wenigstens einer zusätzlichen innen liegenden Spulenscheibe ausgestattet, die zwei Spulenringräume erzeugt und dadurch eine Doppelspule ausbildet/entsteht. Zum Aufspulen der Teilnutzlast auf die Doppelspule wird vorteilhafterweise zunächst schlaufenförmig die Nutzlast in beiden Spulenringräume verlegt und befestigt und danach die Teilnutzlast, die für die dritte Spule vorgesehen ist, auf beide Spulenringräume verteilt und getrennt aufgespult. Vorzugsweise wird die Nutzlast, die auf die Doppelspule gespult wird, gleichzeitig und gleichermaßen von den beiden zuvor beladenen Groß- oder Überlastspulen abgespult. Dabei werden vorteilhafterweise die beiden Ringräume der Doppelspule parallel beladen und gefüllt, insbesondere bis die Sollbeladung der Doppelspule erreicht ist und die Transportfähigkeit der verbliebenen Nutzlast auf den Groß- oder Überlastspulen hergestellt ist. Auch sind diese vorteilhafterweise danach in den Transportmodus rückführbar.

Zur Vergrößerung der Spulenbeladekapazität bei nicht selbstsichernder Nutzlast werden an mindestens einer der beiden Transportspulen, die auch als Groß- oder Überlastspule einsetzbar ist, zusätzliche Anbauelemente zur Vergrößerung des wirksamen Spulenscheibendurchmessers befestigt.

Vorzugsweise werden diese Anbauelemente nach den Schritten 1., 2., 4. und/oder 5. zur Durchführung des Transports gemäß Schritt 3., wieder gelöst und von der Spule getrennt, so dass diese separiert transportiert werden können.

Zur Vergrößerung der Spulenbeladekapazität bei nicht selbstsichernder Nutzlast werden an mindestens eine der beiden Transportspulen, die auch als Groß- oder Überlastspule einsetzbar ist, ist diese mit zusätzlichen Vergrößerungselementen zur Vergrößerung des wirksamen Spulenscheibendurchmessers ausgerüstet, die vorzugsweise manuell oder elektro-mechanisch oder elektro-hydraulisch, reversibel teleskopierbar oder klappbar in die Spul- oder Transportstellung gebracht werden können bzw. verbringbar sind.

Vorzugsweise sind diese Vorrichtungen so ausgeführt, dass sie nach den Schritten 1., 2., 4. und 5. zur Durchführung des Transports gemäß Schritt 3. mit der Spule fest verbunden bleiben.

Zur Vergrößerung der Spulenbeladekapazität bei nicht selbstsichernder Nutzlast, werden Einlege- und/oder Klemmelemente verwendet, wobei diese vorteilhafterweise während der auflaufenden Spulprozesses A1 und U1 auf und zwischen der Nutzlast so platziert werden, dass der seitliche Halt der die Transportnutzlast übersteigenden Nutzlastanteil und deren Rutschsicherheit auf der Groß- oder Überlastspule hergestellt wird, vorzugsweise ohne Vergrößerung des Spulenscheibendurchmessers.

Zur Vergrößerung der Spulenbeladekapazität bei nicht selbstsichernder Nutzlast werden Spannelemente verwendet, wobei diese vorteilhafterweise durch gegenseitiges Verspannen mit dem gegenüberliegenden Spulenflansch diese gegen Verbiegung in Position halten, entgegenwirkend den nach außen gerichteten Kräften durch die Nutzlast.

Zur Herstellung der benötigten Bodenfreiheit für Spulprozesse der Groß- oder Überlastspule auf Spulentransportfahrzeugen werden für Hebe- und Stützprozesse Hebe- und Stützvorrichtungen verwendet, die entweder die Hebe- und Stützfunktion direkt auf die Achs- und Lagerelemente der Spule und/oder auf die Spulenträger der Transportfahrzeuge übertragen.

Zur Herstellung der benötigten Bodenfreiheit für Spulprozesse der Groß- oder Überlastspule auf Spulentransportfahrzeugen für Hebeprozesse werden mobile Rampen oder mobile schiefen Ebenen eingesetzt.

Mit Spulenträger-Zusatzvorrichtungen kann der Transport erfindungsgemäßer Spulen sowohl auf Straßentransportfahrzeugen als auch auf Schienenfahrzeugen erfolgen, wobei vorteilhafterweise solche Zusatzvorrichtungen, ausgeführt als Adaptervorrichtungen und/oder Bindeglied zwischen Spulenträgerrahmen und dem Straßen- oder Schienenfahrzeug, so gestaltet sind, dass diese für die Verladung und/oder Kopplung eines Spulenträgers auf herkömmlichen Dreh- und Auflagergestellen von Straßen- oder Schienenfahrzeugen kompatibel sind.

Die Spulprozesse erfolgen mit Spulenträger-Zusatzvorrichtungen auf Spulentransportfahrzeugen, wobei Spulprozesse der Nutzlast von einer auf eine andere Spule mit mobilen oder auf den Spulentransportfahrzeugen oder Spulenträgern montierten Changiervorrichtungen ausgeführt bzw. unterstützt werden.

Der Schutzbereich der vorliegenden Offenbarung ist ausschließlich durch die nachfolgenden Patentansprüche definiert.

### Bezugszeichenliste:

- 1: Linienförmige Nutzlast, Kabel, Seil
- 1a: begrenzte Transportnutzlast einer Groß- oder Überlastspule im Transportmodus
- 1b: Gesamtnutzlast, Beladekapazität einer Groß- oder Überlastspule im Spulmodus
- 2: Transportfahrzeug, Spulentransportfahrzeug für den Landtransport
- 2a: Kopplungselement (lösbar) zwischen zwei Transportfahrzeugen
- 3: Groß- oder Überlastspule
- 3a: Groß- oder Überlastspule im Transportmodus
- 3b: Groß- oder Überlastspule im Spul- oder Überlastmodus
- 4: Transportspule
- 5: Spulenträger als Vorrichtungen zur Aufnahme von Groß- oder Überlastspulen, geeignet für den Transport von Spulen auf Transportfahrzeugen
- 6: Hebe- und Stützvorrichtungen an Spulenträgern oder Spulentransportfahrzeug zur Erzeugung der erforderlichen Bodenfreiheit für Spulprozesse von Groß- oder Überlastspulen im Spulmodus
- 7a: mobile Rampen für Spulentransportfahrzeuge
- 7b: mobile schiefe Ebenen für Spulentransportfahrzeuge
- 8: Spulenträger-Adaptervorrichtungen zwischen Spulenträger und Spulentransportfahrzeug zur Kopplung von Spulenträgern mit den Fahr- oder Drehgestellen von Straßen- oder Schienentransportfahrzeugen
- 9: Drehlager, Achs- und Lagerelemente der Spulen auf Spulenträgern, Drehlager für Spulendrehachsen auf Spulenträgern
- 10a: Kettenrad oder Zahnrad oder Seilscheibe eines Drehantriebs für Spulen (Spulenantrieb)
- 10b: Antriebskette oder Zahnriemen oder Keilriemen eines Drehantriebs für einen Spulenantrieb
- 10c: Antriebsaggregat als Drehantrieb für einen Spulenantrieb
- 11: Changiervorrichtung für Spulprozesse linienförmiger Nutzlasten auf Spulentransportfahrzeugen

## Patentansprüche

1. Verfahren zur Bereitstellung im Wesentlichen linienförmiger Nutzlasten, insbesondere langer Kabel bzw. Seile großen Durchmessers und/oder Gewichts, an einem Transportzielort, welches folgende Schritte aufweist:
1a. Vergrößern der Bodenfreiheit für eine erste Transportspule (3);
1b. Versetzen der ersten Transportspule (3) in einen Spulmodus durch Umrüsten zu einer Groß- oder Überlastspule und Aufnahme einer Nutzlast durch die erste Transportspule (3) an einem Transportstartort (A1);
2a. Verteilung der aufgenommenen Nutzlast durch Abgabe einer Teilnutzlast (U1);
2b. Zurückversetzen der ersten Transportspule (3) in einen Transportmodus und Verkleinern der Bodenfreiheit für die erste Transportspule (3);
3. Transport der verteilten/geteilten Gesamtnutzlast;
4a. Vergrößern der Bodenfreiheit für die erste Transportspule (3);
4b. erneutes Versetzen der ersten Transportspule (3) in den Spulmodus durch Umrüsten zur Groß- oder Überlastspule und Rückspulen der abgegebenen Teilnutzlast (U2); und
5. Bereitstellung und/oder Abgabe der Gesamtnutzlast an einem Transportzielort (A2).

2. Verfahren nach Anspruch 1, **dadurch gekennzeichnet, dass** im Verfahrensschritt 1b. die Gesamtnutzlast zunächst auf die erste Transportspule aufgespult (A1) wird.

3. Verfahren nach Anspruch 1 oder Anspruch 2, **dadurch gekennzeichnet, dass** im Verfahrensschritt 2a. ein Teil der Nutzlast durch Umspulen (U1) auf mindestens eine zweite Transportspule (4) abgegeben wird.

4. Verfahren nach einem der Ansprüche 1 bis 3, **dadurch gekennzeichnet, dass** im Verfahrensschritt 3. die so geteilte Gesamtnutzlast mittels mindestens zweier Transportspulen, auf mindestens einem Transportfahrzeug transportiert wird.

5. Verfahren nach einem der Ansprüche 1 bis 4, **dadurch gekennzeichnet, dass** im Verfahrensschritt 4b. die geteilte Nutzlast durch Rückspulen wieder auf nur eine Spule umgespult (U2) wird.

6. Verfahren nach einem der Ansprüche 1 bis 5, **dadurch gekennzeichnet, dass** im Verfahrensschritt 5. mit einem wieder verfügbaren freien Ende die Gesamtnutzlast zum Abspulen am Transportzielort bereitgestellt (A2) wird.

7. Verfahren nach einem der Ansprüche 3 bis 5, **dadurch gekennzeichnet, dass** die erste Transportspule (3) und die mindestens eine zweite Transportspule (4) auf voneinander verschiedenen Transportfahrzeugen (2) angeordnet sind, wobei die Transportfahrzeuge (2) mittels einer Kupplungsvorrichtung (2a) miteinander verbindbar bzw. voneinander entkoppelbar sind.

8. Vorrichtung zur Bereitstellung im Wesentlichen linienförmiger Nutzlasten, insbesondere langer Kabel bzw. Seile großen Durchmessers und/oder Gewichts, an einem Transportzielort, umfassend:
einen ersten Spulenträger (5) mit einer ersten Transportspule (3), welche zur Aufnahme einer Nutzlast durch die erste Transportspule (3) an einem Transportstartort sowie zur Bereitstellung und/oder Abgabe der Gesamtnutzlast an dem Transportzielort vorgesehen ist, und
einen zweiten Spulenträger (5) mit einer zweiten Transportspule (3), welche zur zumindest teilweisen Aufnahme der Nutzlast für einen Transport der verteilten/geteilten Gesamtnutzlast sowie zum Rückspulen der abgegebenen Teilnutzlast vorgesehen ist,
wobei der erste Spulenträger (5) dazu ausgebildet ist, die Bodenfreiheit für die erste Transportspule (3), insbesondere durch Hebe- und Stützvorrichtungen (6) des ersten Spulenträgers (5), zu vergrößern und zu verkleinern,
wobei die erste Transportspule (3) dazu eingerichtet ist, durch Umrüsten zu einer Groß- oder Überlastspule in einen Spulmodus versetzt zu werden und in einen Transportmodus zurückversetzt zu werden.

9. Vorrichtung nach Anspruch 8, **dadurch gekennzeichnet, dass** der zweite Spulenträger (5) dazu ausgebildet ist, die Bodenfreiheit für die zweite Transportspule (3), insbesondere durch Hebe- und Stützvorrichtungen (6) des zweiten Spulenträgers (5), zu vergrößern und zu verkleinern.

## Claims

1. Method for providing substantially linear payloads, in particular long cables or ropes of large diameter and/or weight, at a transport destination, comprising the following steps:
1a. Increasing the ground clearance for a first transport spool (3);
1b. Putting the first transport spool (3) into a spooling mode by converting it into a large or overload spool and taking up a payload by the first transport spool (3) at a transport start location (A1);
2a. Distribution of the taken up payload by release of a partial payload (U1);
2b. Resetting the first transport spool (3) to a transport mode and reducing the ground clearance for the first transport spool (3);
3. Transportation of the distributed/split total payload;
4a. Increasing the ground clearance for the first transport spool (3);
4b. Setting the first transport spool (3) to the spooling mode again by converting it to a large or overload spool and rewinding the delivered partial payload (U2); and
5. Provision and/or release of the total payload at a transport destination (A2).

2. Method according to claim 1, **characterized in that**, in method step 1b, the total payload is first spooled onto the first transport spool (A1).

3. Method according to claim 1 or claim 2, **characterized in that**, in method step 2a, a part of the payload is delivered by respooling (U1) onto at least one second transport spool (4).

4. Method according to one of the claims 1 to 3, **characterized in that**, in method step 3, the total payload thus divided is transported by means of at least two transport spools, on at least one transport vehicle.

5. Method according to any one of claims 1 to 4, **characterized in that** the payload divided in method step 4b is respooled onto only one spool (U2) by rewinding.

6. Method according to any one of claims 1 to 5, **characterized in that**, in method step 5, the total payload is provided (A2) for unspooling at the transport destination with a free end that is available again.

7. Method according to one of the claims 3 to 5, **characterized in that** the first transport spool (3) and the at least one second transport spool (4) are arranged on transport vehicles (2) which are different from one another, the transport vehicles (2) being connectable to each other or being decoupable from each other by means of a coupling device (2a).

8. Device for providing substantially linear payloads, in particular long cables or ropes of large diameter and/or weight, at a transport destination, comprising:
a first spool carrier (5) with a first transport spool (3), which is provided for receiving a payload by the first transport spool (3) at a transport starting location and for providing and/or delivering the total payload at the transport destination location, and
a second spool carrier (5) with a second transport spool (3), which is provided for at least partially receiving the payload for a transport of the distributed/divided total payload as well as for rewinding the delivered partial payload,
wherein the first spool carrier (5) is configured to increase and decrease the ground clearance for the first transport spool (3), in particular by means of lifting and supporting devices (6) of the first spool carrier (5),
wherein the first transport spool (3) is adapted to be set into a spooling mode by being converted into a large or overload spool and to be set back into a transport mode.

9. Device according to claim 8, **characterized in that** the second spool carrier (5) is configured to increase and decrease the ground clearance for the second transport spool (3), in particular by means of lifting and supporting devices (6) of the second spool carrier (5).

## Revendications

1. Procédé de fourniture de charges utiles essentiellement en forme linéaire, notamment des câbles ou des cordes longs ayant un grand diamètre et/ou un grand poids, à une destination de transport, le procédé comprenant les étapes suivantes de:
1a. élargir la garde au sol d'une première bobine de transport (3);
1b. mettre la première bobine de transport (3) en un mode de bobinage en convertissant la bobine en une grande bobine ou en une bobine de surcharge et en recevant une charge utile par la première bobine de transport (3) à un emplacement de départ de transport (A1);
2a. distribuer la charge utile reçue en déchargeant une charge utile partielle (U1);
2b. faire retourner la première bobine (3) en un mode de transport et diminuer la garde au sol de la première bobine de transport (3);
3. transport de la charge utile distribuée /divisée;
4a. agrandir la garde au sol de la première bobine de transport (3);
4b. mettre la première bobine de transport (3) de nouveau en mode de bobinage en convertissant la bobine en la grande bobine ou en la bobine de surcharge et en rembobinant la charge utile déroulée (U2); et
5. fournir et/ou décharger la charge utile entière à une destination de transport (A2).

2. Procédé selon Is revendication 1, **caractérisé en ce que** dans l'étape de procédé 1b. la charge utile entière est d'abord enroulée sur la première bobine de transport (A1).

3. Procédé selon la revendication 1 ou la revendication 2, **caractérisé en ce que** dans l'étape de procédé 2a. une partie de la charge utile est déchargée sur au moins une deuxième bobine de transport (4) par rembobinage (U1).

4. Procédé selon l'une des revendications 1 à 3, **caractérisé en ce que** dans l'étape de procédé 3. la charge utile entière ainsi divisée est transportée par moyen d'au moins deux bobines de transport sur au moins un véhicule de transport.

5. Procédé selon l'une des revendications 1 à 4, **caractérisé en ce que** dans l'étape de procédé 4b. la charge utile divisée est embobinée de nouveau sur une seule bobine par rembobinage (U2).

6. Procédé selon l'une des revendications 1 à 5, **caractérisé en ce que** dans l'étape de procédé 5. la charge utile entière est fournie avec une extrémité libre disponible de nouveau pour être déroulée à la destination de transport (A2).

7. Procédé selon l'une des revendications 3 à 5, **caractérisé en ce que** la première bobine de transport (3) et l'au moins une deuxième bobine de transport (4) sont disposées sur des véhicules de transport (2) différents l'un de l'autre, les véhicules de transport (2) pouvant être reliés l'un à l'autre ou être découplés l'un de l'autre par moyen d'un dispositif de couplage (2a).

8. Dispositif de fourniture de charges utiles essentiellement en forme linéaire, notamment des câbles ou des cordes longs ayant un grand diamètre et/ou un grand poids, à une destination de transport, le dispositif comprenant:
un premier support de bobine (5) avec une première bobine (3), qui est prévue pour recevoir une charge utile par la première bobine de transport (3) à un emplacement de départ de transport ainsi que pour fournir et/ou dérouler la charge utile entière à la destination de transport, et
un deuxième support de bobine (5) avec une deuxième bobine de transport (3), qui est prévue pour recevoir la charge utile au moins partiellement pour un transport de la charge utile entière distribuée/divisée ainsi que pour rembobiner la charge utile partielle déchargée,
dans lequel le premier support de bobine (5) est configuré pour agrandir et pour diminuer la garde au sol de la première bobine de transport (3), notamment par moyen des dispositifs de levage et de soutien (6) du premier support de bobine (5),
dans lequel la première bobine de transport (3) est adaptée à être mise en un mode de bobinage en convertissant la bobine en une grande bobine ou en une bobine de surcharge et à être remise en un mode de transport.

9. Dispositif selon la revendication 8, **caractérisé en ce que** le deuxième support de bobine (5) est configuré pour agrandir et pour diminuer la garde au sol de la deuxième bobine de transport (3), notamment par moyen des dispositifs de levage et de soutien (6) du deuxième support de bobine (5).
